# EUROPEAN PATENT SPECIFICATION

(11) **EP 1 837 192 B1**
(45) Date of publication and mention of the grant of the patent: **15.10.2008**
(21) Application number: 06711705.1
(22) Date of filing: 16.01.2006
(51) Int. Cl.: B41M 5/44, B41M 5/52

(54) **THERMAL TRANSFER IMAGE-RECEIVING SHEET AND PROCESS FOR PRODUCING THE SAME**
FOLIE ZUM EMPFANG VON BILDERN DURCH THERMALE ÜBERTRAGUNG UND HERSTELLUNGSVERFAHREN DAFÜR
FEUILLE DE RECEPTION D'IMAGE DE TRANSFERT THERMIQUE ET PROCEDE DE PRODUCTION ASSOCIE

(30) Priority: 14.01.2005 JP 2005007059; 17.02.2005 JP 2005041097; 25.08.2005 JP 2005243943
(43) Date of publication of application: 26.09.2007
(73) Proprietor: DAI NIPPON PRINTING CO., LTD., Tokyo 162-8001 (JP)
(72) Inventor: OMATA, Takenori c/o Dai Nippon Printing Co., Ltd., Tokyo, 162-8001 (JP); ORIMO, Yoji c/o Dai Nippon Printing Co., Ltd.,, Tokyo, 162-8001 (JP)
(74) Representative: Hart-Davis, Jason
(86) International application number: PCT/JP2006/300424
(87) International publication number: WO 2006/075734

(56) References cited:
- JP-A- 1 247 196
- JP-A- 2 026 739
- JP-A- 3 207 694
- JP-A- 3 293 197
- JP-A- 4 028 593
- JP-A- 4 336 286
- JP-A- 5 016 539
- JP-A- 5 155 163
- JP-A- 5 254 263
- JP-A- 5 309 959
- JP-A- 7 076 186
- JP-A- 7 309 073
- JP-A- 10 324 072
- JP-A- 11 286 182
- JP-A- 2000 118 156
- JP-A- 2000 127 303
- JP-A- 2000 177 257
- JP-A- 2001 039 042
- JP-A- 2002 337 465
- JP-A- 2003 200 669
- JP-A- 2004 181 888
- JP-A- 2004 330 442
- JP-A- 2004 345 267

## Description

### TECHNICAL FIELD

The present invention relates to a thermal transfer image-receiving sheet which is used with a thermal transfer sheet of sublimation dye transfer and a method of producing the same, and more particularly to a thermal transfer image-receiving sheet which can be used in the area of a wide variety of color printers such as a video printer and the like and has a high print density and good productivity, and a method of producing the same.

### BACKGROUND ART

Hitherto, various thermal transfer methods have been publicly known, and among these methods, a method, in which a sublimation dye is used as a recording material and it is supported on a substrate sheet of paper, a plastic film or the like to form a thermal transfer sheet, and various full color images are formed on a thermal transfer image-receiving sheet which can be dyed with a sublimation dye, for example, a thermal transfer image-receiving sheet in which a dye receiving layer is provided on the surface of paper, a plastic film or the like, is proposed. This method can adjust density tones freely since it uses the sublimation dye as a color material and can express full color images of documents. And, since its images formed by a dye has high sharpness and excellent transparency, this method has excellent halftone reproducibility and excellent tone reproducibility and can form high quality images compatible with silver halide photography.

In order to form print images of high quality at a high speed on the image-receiving sheet by such a sublimation thermal transfer printer, an image-receiving layer predominantly composed of a dye-dyeable resin is provided on the substrate, but when paper such as a coated paper or an art paper is used as a substrate of the image-receiving sheet, the image-receiving sheet has a drawback that the sensitivity of receiving a dye for forming images is low because it has relatively high thermal conductivity.

Accordingly, it is known to use a biaxially stretched film, which is predominantly composed of a thermoplastic resin such as polyolefin and has voids, as a substrate of the image-receiving sheet as shown in Patent Document 1. Since the image-receiving sheet containing such a film as a substrate has a uniform thickness and flexibility and its thermal conductivity is small compared with paper consisting of cellulose fibers, it has advantages that uniform and high density images can be attained. But, when these films are used, the step of laminating an image-receiving layer on a biaxially stretched film is further required, and this method has disadvantages that production efficiency is low and product cost is significantly increased.

Further, in Patent Document 2, there is described a thermal transfer image-receiving material, used in combination with a material providing a dye, which includes a dye transferred by heating, and having a receiving layer to receive a dye being transferred by heating, wherein at least the foregoing receiving layer consists of a layer of a film formed by melt-extruding polyester or a resin predominantly composed of polyester to form a film and stretching this melt-extruded film by 1.2 times or more and 3.6 times or less in terms of an area. However, since the above-mentioned receiving layer does not have voids, a heat-insulating property of the layer is not sufficient, and a level of the image density in a printed substance on which images are formed is not satisfactory.

Further, in Patent Document 3, there is described an image-receiving sheet for thermal transfer recording in which a cushion layer consisting of polyester resin is formed by bonding by a melt-extrusion coating method on a base paper and a dye-receiving layer is provided on the cushion layer. This image-receiving sheet enhances the smoothness of the cushion layer to enhance the smoothness of the dye-receiving layer further. However, in this image-receiving sheet, since both the cushion layer and the dye-receiving layer do not have voids, a heat-insulating property of the layers is not sufficient, and a level of the image density in a printed substance on which images are formed is not satisfactory.
Patent Document 1: Japanese Kokai Publication Hei-5-16539
Patent Document 2: Japanese Kokai Publication Hei-9-1943
Patent Document 3: Japanese Kokai Publication Hei-9-99652

### DISCLOSURE OF THE INVENTION

### Problems to be Solved by the Invention

It is an object of the present invention to provide a high performance and highly productive thermal transfer image-receiving sheet which solves drawbacks of the prior art, i.e., drawbacks such as the deterioration in sensitivity in using a pulp paper such as a coated paper as a substrate, and the reduction in productivity and the increase in cost in using a laminated and bonded sheet of a void-containing biaxially stretched film and a core material, is inexpensive, and can attain high-density and high-resolution images having no density irregularity and dot missing.

### Means for Solving the Problems

A first aspect of the present invention pertains to a thermal transfer image-receiving sheet prepared by forming at least an insulating layer and an image-receiving layer in this order on a substrate,
wherein said thermal transfer image-receiving sheet comprises a layered body of a film having the insulating layer including a thermoplastic resin (A) and a resin or filler which is not compatible with the thermoplastic resin (A) and the image-receiving layer including a thermoplastic resin (B), and formed by melt-coextruding said insulating layer and said image-receiving layer and then stretching this melt-coextruded film, and
said thermal transfer image-receiving sheet is a substance having the layered body laminated on a substrate with the insulating layer side of the layered body faced with the substrate, and
said image-receiving layer or a release layer provided on said image-receiving layer side of said layered body contains modified silicone oil, and
the void fraction of the insulating layer is 15 to 65%.
A second aspect of the present invention pertains to the thermal transfer image-receiving sheet according to the first aspect of the present invention,
wherein at least one of the foregoing thermoplastic resin (A) and the foregoing thermoplastic resin (B) is a polyester resin.
A third aspect of the present invention pertains to a thermal transfer image-receiving sheet prepared by forming at least a good adhesive layer, an insulating layer and an image-receiving layer in this order on a substrate,
wherein said thermal transfer image-receiving sheet comprises a layered body of a film having the good adhesive layer including a thermoplastic resin (C), the insulating layer including a thermoplastic resin (A) and a resin or filler which is not compatible with the thermoplastic resin (A), and the image-receiving layer including a thermoplastic resin (B), and formed by melt-coextruding said good adhesive layer, said insulating layer and said image-receiving layer and then stretching this melt-coextruded film, and
said thermal transfer image-receiving sheet is a substance having the layered body laminated on a substrate with the good adhesive layer side of the layered body faced with the substrate, and
said image-receiving layer or a release layer provided on said image-receiving layer side of said layered body contains modified silicone oil, and
the void fraction of the insulating layer is 15 to 65%.
A fourth aspect of the present invention pertains to the thermal transfer image-receiving sheet according to the third aspect of the present invention,
wherein at least one of the foregoing thermoplastic resin (A), the foregoing thermoplastic resin (B) and the foregoing thermoplastic resin (C) is a polyester resin.

A fifth aspect of the present invention pertains to the thermal transfer image-receiving sheet according to the second or fourth aspect of the present invention,
wherein the foregoing image-receiving layer contains an amorphous polyester resin. By containing the amorphous polyester resin, the dyeability of dyes and the image density of the image-receiving layer are improved.
A sixth aspect of the present invention pertains to the thermal transfer image-receiving sheet according to the second or fourth aspect of the present invention,
wherein the foregoing image-receiving layer contains a polybutylene terephthalate resin. Since polybutylene terephthalate has stable melt viscosity in an elevated temperature region of 200°C or higher, the stability of extrusion in the elevated temperature region is improved by adding it and the image density of the image-receiving layer is also improved.
A seventh aspect of the present invention pertains to the thermal transfer image-receiving sheet according to any one of the second, fourth, fifth and sixth aspects of the present invention,
wherein the foregoing image-receiving layer contains an amorphous polyester resin and a polymer having an epoxy group. Since the polymer having an epoxy group reacts with an amorphous polyester resin through crosslinking to improve melt viscosity, the ability of the image-receiving layer to be extruded in the elevated temperature region described above is improved.
A eighth aspect of the present invention pertains to the thermal transfer image-receiving sheet according to any one of the first to seventh aspects of the present invention,
wherein a stretching ratio of the film to be stretched is a factor of 3.6 or more and 25 or less in terms of an area.
A ninth aspect of the present invention pertains to the thermal transfer image-receiving sheet according to any one of the first to eighth aspects of the present invention,
wherein the foregoing thermal transfer image-receiving sheet is formed by applying a polyester resin on the side of the substrate which is not the side of the foregoing substrate on which the foregoing layered body is laminated.

A tenth aspect of the present invention pertains to a method of producing a thermal transfer image-receiving sheet in which at least an insulating layer and an image-receiving layer are formed in this order on a substrate, comprising the steps of
melt-coextruding the insulating layer including a thermoplastic resin (A) and a resin or filler which is not compatible with the thermoplastic resin (A) and the image-receiving layer including a thermoplastic resin (B) to form a film, and then stretching this melt-coextruded film to form a layered body of a film, and then laminating the layered body on a substrate with the insulating layer side of the layered body faced with the substrate,
wherein said image-receiving layer or a release layer provided on said image-receiving layer side of said layered body contains modified silicone oil and
the void fraction of the insulating layer is 15 to 65%.
An eleventh aspect of the present invention pertains to the method of producing a thermal transfer image-receiving sheet according to the tenth aspect of the invention,
wherein at least one of the foregoing thermoplastic resin (A) and the foregoing thermoplastic resin (B) is a polyester resin.

A twelfth aspect of the present invention pertains to a method of producing a thermal transfer image-receiving sheet in which at least a good adhesive layer, an insulating layer and an image-receiving layer are formed in this order on a substrate, comprising the steps of
melt-coextruding the good adhesive layer including a thermoplastic resin (C), the insulating layer including a thermoplastic resin (A) and a resin or filler which is not compatible with the thermoplastic resin (A) and the image-receiving layer including a thermoplastic resin (B) to form a film, and then stretching this melt-coextruded film to form a layered body of a film, and then laminating the layered body on a substrate with the good adhesive layer side of the layered body faced with the substrate,
wherein said image-receiving layer or a release layer provided on said image-receiving layer side of said layered body contains modified silicone oil and
the void fraction of the insulating layer is 15 to 65%.
A thirteenth aspect of the present invention pertains to the method of producing a thermal transfer image-receiving sheet according to the twelfth aspect of the present invention,
wherein at least one of the thermoplastic resin (A), the thermoplastic resin (B) and the thermoplastic resin (C) is a polyester resin.
A fourteenth aspect of the present invention pertains to the method of producing a thermal transfer image-receiving sheet according to any one of the tenth to thirteenth aspects of the present invention,
wherein a stretching ratio of the film to be stretched is a factor of 3.6 or more and 25 or less in terms of an area.
A fifteenth aspect of the present invention pertains to the method of producing a thermal transfer image-receiving sheet according to any one of the tenth to fourteenth aspects of the present invention,
wherein the foregoing thermal transfer image-receiving sheet is formed by applying a polyester resin on the side of the substrate which is not the side of the foregoing substrate on which the foregoing layered body is laminated.

### EFFECT OF THE INVENTION

The method of producing a thermal transfer image-receiving sheet of the present invention is a method in which an insulating layer and an image-receiving layer are formed in this order on a substrate or a good adhesive layer, an insulating layer and an image-receiving layer are formed in this order on a substrate, and a method of producing a thermal transfer image-receiving sheet by melt-coextruding two layers of the insulating layer including a thermoplastic resin (A) and a resin or filler which is not compatible with the thermoplastic resin (A) and the image-receiving layer including a thermoplastic resin (B) such as polyester resin, or three layers of the good adhesive layer including a thermoplastic resin (C), the insulating layer including a thermoplastic resin (A) and a resin or filler which is not compatible with the thermoplastic resin (A) and the image-receiving layer including a thermoplastic resin (B) to form a film, and then stretching this melt-coextruded film to form a layered body of a film, and then laminating the layered body on a substrate with the insulating layer (good adhesive layer) side of the layered body faced with the substrate.
The above-mentioned method of producing a thermal transfer image-receiving sheet does not use a solvent for dilution or forming a solution as desired in the steps including the step of forming a good adhesive layer, the step of forming an insulating layer and the step of forming an image-receiving layer, and the step of laminating the film on a substrate, and can realize substantially solvent-free production steps, and has high safety in working environment, exhaust emission and the like. Furthermore, when solvent-free production steps are realized, speedups of the production steps are promoted since drying of the solvent is unnecessary.

Since the thermal transfer image-receiving sheet of the present invention is subjected to melt-extrusion and stretching treatment, the resin or filler, which is not compatible with the thermoplastic resin (A) composing the insulating layer, generates cavities at the boundary face with the thermoplastic resin (A) in the thermoplastic resin (A) of the insulating layer. That is, this thermal transfer image-receiving sheet forms voids in the insulating layer, and thereby the heat resistance and the cushioning property of the insulating layer are improved and high-density and high-resolution images in a printed substance are achieved.

### BEST MODE FOR CARRYING OUT THE INVENTION

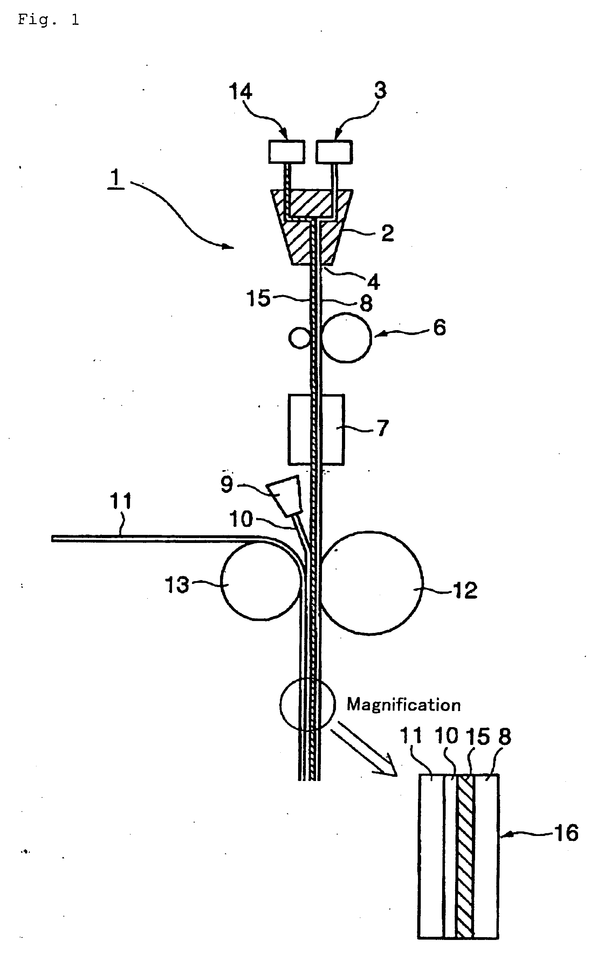

A method of producing the thermal transfer image-receiving sheet of the present invention will be described by way of the producing system 1 shown in Figure 1. A material 14 of the insulating layer formed by mixing a polyester resin with a resin or filler which is not compatible with the polyester resin, and a material 3 of the image-receiving layer including a polyester resin are supplied to a die head 2 through separate paths, and the material of the insulating layer and the material of the image-receiving layer are co-extruded from an outlet 4 of the die head 2 in a state of being melted to form a film layer consisting of two layers of the image-receiving layer 8 and the insulating layer 15, and subsequently the resulting film is stretched in a longitudinal direction with a pair of stretching rolls 6 having different peripheral speeds, and then stretched in a transverse direction with a tenter 7, and next the film is heated to the extent at which stretching stress of a material is mitigated while chucking the film to perform heat setting and form a layered body consisting of two layers of an image-receiving layer 8 and an insulating layer 15. Next, an adhesive 10 is melt-extruded from a die head 9, and a supplied substrate 11 and the above-mentioned layered body are passed between a laminating roll 12 and a press roll 13 with the adhesive 10 sandwiched between the substrate 11 and the layered body to laminate the film by thermal melt-extrusion (EC laminate) by pressing with both rolls. Thereby, a thermal transfer image-receiving sheet 16 in which an adhesive layer 10, an insulating layer 15 and an image-receiving layer 8 are provided in this order on a substrate 11 is obtained. In the above example, the thermal transfer image-receiving sheet in which a polyester resin is used for the material of the insulating layer and the material of the image-receiving layer is shown, but these materials are not limited to the polyester resin and a material of the insulating layer formed by mixing a thermoplastic resin other than a polyester resin with a resin or filler which is not compatible with the thermoplastic resin and a material of the image-receiving layer including a thermoplastic resin other than a polyester resin may be used.

Further, as an example of the method of producing the thermal transfer image-receiving sheet of the present invention, a thermal transfer image-receiving sheet having a constitution in which an adhesive layer, a good adhesive layer, an insulating layer and an image-receiving layer are provided in this order on a substrate, but not shown, will be described.
A material of the good adhesive layer including a thermoplastic resin such as polyester resin, a material of the insulating layer formed by mixing a thermoplastic resin such as polyester resin with a resin or filler which is not compatible with the thermoplastic resin, and a material of the image-receiving layer including a thermoplastic resin such as polyester resin are supplied to a die head through separate paths, and the material of the good adhesive layer, the material of the insulating layer and the material of the image-receiving layer are co-extruded from an outlet of the die head in a state of being melted to form a film consisting of three layers of the good adhesive layer, the image-receiving layer and the insulating layer, and subsequently the resulting film is stretched in a longitudinal direction with a pair of stretching rolls having different peripheral speeds, and then stretched in a transverse direction with a tenter, and next the film is heated to the extent at which stretching stress of a material is mitigated while chucking the film to perform heat setting and form a layered body consisting of three layers of a good adhesive layer, an insulating layer and an image-receiving layer. Next, an adhesive is melt-extruded from a die head, and a supplied substrate and the above-mentioned layered body are passed between a laminating roll and a press roll with the adhesive sandwiched between the substrate and the layered body to laminate the film by thermal melt-extrusion by pressing with both rolls. Thereby, a thermal transfer image-receiving sheet, in which an adhesive layer, a good adhesive layer, an insulating layer and an image-receiving layer are provided in this order on a substrate, can be obtained (refer to Figure 1).

### (Method of producing thermal transfer image-receiving sheet)

A method of producing a thermal transfer image-receiving sheet of the present invention is broadly divided into two methods. One of these two methods is a method of producing a thermal transfer image-receiving sheet in which at least an insulating layer and an image-receiving layer are formed in this order on a substrate, and a layered body of a film is formed by melt-coextruding the insulating layer including a thermoplastic resin (A) such as polyester resin and a resin or filler which is not compatible with the thermoplastic resin (A) and the image-receiving layer including a thermoplastic resin (B) to form a film and then stretching this melt-coextruded film, and then the layered body is laminated on a substrate with the insulating layer side of the layered body faced with the substrate.

The second method is a method of producing a thermal transfer image-receiving sheet in which at least a good adhesive layer, an insulating layer and an image-receiving layer are formed in this order on a substrate, and a layered body of a film is formed by melt-coextruding the good adhesive layer including a thermoplastic resin (C), the insulating layer including a thermoplastic resin (A) such as polyester resin and a resin or filler which is not compatible with the thermoplastic resin (A), and the image-receiving layer including a thermoplastic resin (B) to form a film and then stretching this melt-coextruded film, and then the layered body is laminated on a substrate with the good adhesive layer side of the layered body faced with the substrate.

By performing melt-extrusion and stretching treatment in the step of forming the insulating layer, the resin or filler, which is not compatible with the thermoplastic resin (A) composing the insulating layer, generates cavities at the boundary face with the thermoplastic resin (A) in the thermoplastic resin (A) of the insulating layer, and therefore voids are formed in the insulating layer and the heat resistance and the cushioning property of the insulating layer can be improved. In the present invention, the void fraction of the obtained insulating layer needs to be in a range of 15 to 65%. The void fraction of the insulating layer is preferably adjusted so as to be in a range of 30 to 50%. In order to adjust this void fraction, for example, an amount of the resin or filler which is not compatible with the thermoplastic resin (A) composing the insulating layer to be mixed is adjusted, or a stretching ratio of the coextruded film in a stretching step is adjusted.

The above-mentioned adjustment of the amount of the resin to be mixed in the insulating layer varies depending on the species of a material resin to be used, a particle diameter of a filler and the like, and examples of the adjustment include a mixing ratio of the thermoplastic resin (A) composing the insulating layer/the resin or filler which is not compatible with the thermoplastic resin (A) of 97/3 to 60/40 (by weight), preferably 90/10 to 80/20 (by weight).
Further, in adjustment of the void fraction in the insulating layer, when a stretching ratio of the film to be stretched is adjusted preferably so as to be a factor of 3.6 or more and 25 or less in terms of an area, and more preferably so as to be a factor of more than 3.6 and 25 or less in terms of an area, the void fraction of the insulating layer can be easily brought into a range of 15 to 65%. When the stretching ratio is less than a factor of 3.6, voids are not adequately produced in the stretched film since stretching is not adequately performed, and therefore sometimes heat resistance and a cushioning property cannot be adequately exerted. On the other hand, when the stretching ratio is more than a factor of 25, sometimes it is not preferred since the stretching condition is too strong and smoothness of the stretched film is deteriorated.
In order to adjust the stretching ratio within the above range, it is necessary to properly carry out adjustments, for example, adjustments of the surface temperature of the stretching roll and the ambient temperature of a stretching treatment, and adjustments of a rotational speed of the stretching roll and a running speed of a film. For example, adjustments of the surface temperature of the stretching roll in stretching the film and the ambient temperature of a stretching treatment are set at temperatures of not less than a glass transition temperature and less than a melting point of a resin composing a material to be stretched. Specific temperatures are set within a range of 60 to 160°C, preferably 80 to 130°C.

In the present invention, the void fraction in the insulating layer is specified, and the void fraction (V) in the present invention was determined from the equation of void fraction (V)=(1-ρ/ρ₀) × 100 (%) based on a percentage of the density (ρ) of the objective insulating layer divided by the density (ρ₀) of the whole solid matter of the resin and filler composing the insulating layer.
Further, the density (p) of the insulating layer is a density of an insulating layer having a foam structure and a value in a constitution including cavities. On the other hand, the density (ρ₀) of the whole solid matter of the resin and filler composing the insulating layer is a value not including cavities and a density in the solid matter alone.
When the void fraction of the insulating layer is less than a range of 15 to 65%, a ratio of many pores which are micro voids being minute cavities is low and features of the insulating layer in the present invention such as satisfactory heat resistance and cushioning property cannot be exerted. On the other hand, when the void fraction of the insulating layer is more than the above-mentioned range, coatings remaining in the insulating layer become thin, and therefore many pores of minute cavities lose their shape and micro voids cannot be formed. Further, as the density (p) of an insulating layer having a foam structure, which is applied in the present invention, a range of 0.3 to 1 g/cm³ is preferred, and a range of 0.4 to 0.9 g/cm³ is more preferred.

As a melt-coextrusion method in the method of producing a thermal transfer image-receiving sheet, coextrusion using a T die such as a field block method, a multi manifold method and a multi slot die method, and coextrusion by a inflation method using a circle die can be used. And, a stretching treatment is not limited to a longitudinal and transverse stretching shown in a drawing, and stretching only in a longitudinal direction or stretching only in a transverse direction may be employed. And, a longitudinal and transverse biaxial stretching is not limited to the case where after stretching in a longitudinal direction, stretching in a transverse direction shown in the drawing, and stretching in a longitudinal direction after stretching in a transverse direction, and stretching in a longitudinal direction and in a transverse direction can be simultaneously carried out. And, stretching in a longitudinal direction and stretching in a transverse direction may be divided into several number of stretching, respectively, and carried out. And, divided stretching in a longitudinal direction and in a transverse direction may be carried out alternately.

In the production method of the present invention, it has been mainly described that the substrate is supplied and the layered body consisting of the insulating layer and the image-receiving layer or the layered body consisting of the good adhesive layer, the insulating layer and the image-receiving layer and the substrate are melt-extruded to form a laminate.
In this laminating condition, the adhesive is melt-extruded, and the layered body consisting of the insulating layer and the image-receiving layer, or the layered body consisting of the good adhesive layer, the insulating layer and the image-receiving layer are laminated on the substrate, but a laminating method is not limited to this, and common laminating methods can be used for laminating the above-mentioned layered body on the above-mentioned substrate with the insulating layer side of the layered body faced with the substrate, and for example, the above-mentioned adhesive for lamination may be applied by a printing method such as gravure coating to perform wet lamination or dry lamination.
Further, calendering can be carried out after the melt-extrusion step, the stretching treatment step and the substrate laminating step described above, and thereby a more smooth thermal transfer image-receiving sheet can be obtained. It is also possible to apply a polyester resin on the side of the foregoing substrate which is not the side of the substrate on which the layered body is laminated. It is preferred that the application of the polyester resin is previously carried out prior to the lamination of the layered body.

Next, the thermal transfer image-receiving sheet of the present invention will be described. The substrate and the respective layers composing the thermal transfer image-receiving sheet prepared by the production method of the present invention have the same features as those of the thermal transfer image-receiving sheet of the present invention.

### (Substrate)

In the thermal transfer image-receiving sheet of the present invention, two layers of the insulating layer and the receiving layer or three layers of the good adhesive layer, the insulating layer and the receiving layer are formed on the substrate, and an intermediate layer may be added as required. Since the above-mentioned substrate has the function of holding the insulating layer, the receiving layer and the like, and is subjected to heat in thermally transferring, it preferably has the level of mechanical strength that does not interfere with handling of the thermal transfer image-receiving sheet in a state of being heated.
Examples of materials of such a substrate include capacitor paper, glassine paper, parchment paper, or paper having high sizing, synthetic paper (polyolefin, polystyrene), bond paper, art paper, coated paper, cast coated paper, wall paper, backing paper, synthetic resin or emulsion-impregnated paper, synthetic rubber latex-impregnated paper, synthetic resin added paper, board paper and cellulose fiber paper; or films consisting of a synthetic resin such as polyester, polyacrylate, polycarbonate, polyurethane, polyimide, polyetherimide, cellulose derivatives, polyethylene, ethylene-vinyl acetate copolymer, polypropylene, polystyrene, acryl, polyvinyl chloride, polyvinylidene chloride, polyvinyl alcohol, polyvinyl butyral, nylon, polyetheretherketone, polysulfone, polyethersulfone, tetrafluoroethylene-perfluoroalkylvinylether, polyvinyl fluoride, tetrafluoroethylene-ethylene, tetrafluoroethylene-hexafluoropropylene, polychlorotrifluoroethylene and polyvinylidene fluoride, and white opaque film obtained by adding white pigment and filler to the above-mentioned synthetic resins and forming them into a film, or a foamed foam sheet can also be used.

In the present invention, it is preferred to use particularly pulp paper such as bond paper, art paper, coated paper and cast coated paper among the above-mentioned substrates since the cost reduction or the like becomes possible.
Further, as the above-mentioned substrate, a layered body based on the arbitrary combination of the above-mentioned materials can be used.
The thickness of the substrate may be arbitrary and it is generally about 10 to 300 µm. And, when the adhesion of the above-mentioned substrate to a layer provided thereon is low, it is preferred to apply various primer treatments or a corona discharge treatment to the surface of the substrate. By supplying the substrate and laminating the layered body of the insulating layer and the image-receiving layer or the layered body consisting of the good adhesive layer, the insulating layer and the image-receiving layer (hereinafter, these laminated bodies may be collectively called a "receiving film") on the substrate, the ability to prevent curling and the physical strength in handling can be enhanced.
Further, in order to minimize curling of the image-receiving sheet, by extrusion coating of a resin layer or bonding of a film, a resin layer of a polyester resin or the like can be provided on the side (hereinafter, referred to as a "backside") of the substrate which is not the side of the substrate to which the receiving film is bonded. When the receiving film is formed from a polyester material, by applying extrusion coating of polybutylene terephthalate or bonding a polyethylene terephthalate [PET] film to the backside of the substrate, curling can be easily minimized. Since polybutylene terephthalate is crystallized immediately after extrusion, an orientation treatment and the like after extrusion coating is unnecessary and a heat resistant layer can be easily formed.

### (Adhesive)

The adhesive melt-extruded in laminating the layered body of the insulating layer and the image-receiving layer, or the layered body consisting of the good adhesive layer, the insulating layer and the image-receiving layer on the substrate described above is formed from the resins described below.
It is preferred to use a resin having a small neck in (a phenomenon in which a film width becomes narrower than a die width or its level) and a relatively good draw down property (measure of high speed spreading property and high speed processability), for example, polyolefin resins such as high density polyethylene, intermediate density polyethylene, low density polyethylene, polypropylene, ethylene-vinyl acetate copolymer, ethylene-acrylic acid copolymer (EAA), ethylene-methacrylic acid copolymer (EMAA), ethylene-maleic acid copolymer, ethylene-fumaric acid copolymer, ethylene-maleic anhydride copolymer, ethylene-methyl acrylate copolymer and ethylene-methyl methacrylate copolymer; polyester resins such as polyethylene terephthalate; ionomer resins; nylon; and polystyrene and polyurethane.

Further, wet lamination or dry lamination can also be performed using an acrylic resin as an adhesive. The acrylic resins are acrylic resins obtained by polymerizing acrylamide or acrylonitrile which are derivatives of acrylic acid, and copolymer resins of other acrylic esters and other monomers such as styrene, and examples of the substances include substances consisting of monopolymers or copolymers including (meth) acrylic esters such as polymethyl (meth) acrylate, polyethyl (meth)acrylate, polybutyl (meth) acrylate, methyl (meth)acrylate-butyl (meth)acrylate copolymer, methyl (meth)acrylate-2-hydroxyethyl (meth)acrylate copolymer, butyl (meth)acrylate-2-hydroxyethyl (meth)acrylate copolymer, methyl (meth)acrylate-2-hydroxypropyl (meth)acrylate copolymer, methyl (meth)acrylate-butyl (meth) acrylate-2-hydroxyethyl (meth) acrylate copolymer and styrene-methyl (meth) acrylate copolymer. Incidentally, (meth) acrylic acid means acrylic acid and methacrylic acid. Resins composing the adhesive described above may be used alone or in a mixture of several species of resins. A thickness of this adhesive to be applied can be appropriately changed, but it is generally about 1 to 50 g/m² (solid matter).

### (Insulating layer)

The insulating layer is composed of a material formed by mixing a thermoplastic resin with a resin or filler which is not compatible with the thermoplastic resin as a main component.
Examples of the thermoplastic resin include polyolefin resins such as polypropylene; halogenated polymers such as polyvinyl chloride and polyvinylidene chloride; vinyl resins such as polyvinyl acetate, ethylene-vinyl acetate copolymer, vinyl chloride-vinyl acetate copolymer and polyacrylic ester; acetal resins such as polyvinyl formal, polyvinyl butyral and polyvinyl acetal; various saturated and unsaturated polyester resins; polycarbonate resins; cellulose resins such as cellulose acetate; styrene resins such as polystyrene, acryl-styrene copolymer and acrylonitrile-styrene copolymer; polyamide resins such as benzoguanamine resins; and the like.
These resins can be freely blended within the range of maintaining the ability of the insulating layer to be formed by extrusion and the compatibility with the insulating layer.

Of the above-mentioned thermoplastic resin, polyester resins are preferred as the thermoplastic resin (hereinafter, also referred to as a "thermoplastic resin (A)") in the insulating layer from the viewpoint of cost and suitability for stretching.
These polyester resins may be a homopolymer or may be a copolymer formed by copolymerizing by including a third component.
As the above-mentioned polyester resin, polyethylene terephthalate resin, polybutylene terephthalate resin, polyethylene-butylene terephthalate, and polyethylene-2,6-naphthalate are exemplified as a typical resin.
Examples of the above-mentioned polyester resin include copolymerized polyester resins obtained by polycondensation of aromatic dicarboxylic acid such as terephthalic acid, isophthalic acid, naphthalenedicarboxylic acid and the like or esters thereof, and glycols such as ethylene glycol, diethylene glycol, 1,4-butanediol, neopentyl glycol and the like.
Examples of the above-mentioned copolymerized polyester resins include copolymerized polyester resins which have terephthalic acid and ethylene glycol as the main components and contain other acid components and/or other glycol components as a copolymerization component. Other acid components and/or other glycol components will be described later.
By containing copolymerized polyester resin, suitability for stretching can be improved and a stretching ratio can be enhanced.

In the case of using the polyester resin as the thermoplastic resin in the insulating layer, as a resin which is not compatible with the polyester resin, any resin can be used as long as it is a substance which is not compatible with the polyester resin as a base resin, and is mixed uniformly in the polyester resin in a state of dispersion, and becomes a source to cause peeling at the boundary face with the polyester resin as a base resin to generate voids in stretching the polyester resin, but examples of preferred resin include a polystyrene resin, a polyolefin resin, a polyacrylic resin, a polycarbonate resin, a polysulfone resin, and a cellulose resin. These resins can be used alone or in combination of two or more species as required. Alternatively, it is also possible to provide moderate affinity with the polyester resin by copolymerizing these resins.
Among the above-mentioned resin, the polystyrene resin or the polyolefin resin such as polymethylpentene, polypropylene, or cyclic olefin is preferably used.
Further, in the case of using a thermoplastic resin other than the polyester resin in the insulating layer, as a resin which is not compatible with the thermoplastic resin, any resin may be used as long as it is a substance which is not compatible with the thermoplastic resin as a base resin, and is mixed uniformly in the thermoplastic resin of a base resin in a state of dispersion, and becomes a source to cause peeling at the boundary face with the base resin to generate voids in stretching the thermoplastic resin.

When the insulating layer is composed of the thermoplastic resin (A) and the resin which is not compatible with the thermoplastic resin (A) as components, a ratio of the resin which is not compatible with the thermoplastic resin (A) to be added to the thermoplastic resin (A) as a base resin varies depending on the void fraction or the stretching conditions required for a stretched film ultimately obtained, and this ratio is generally 3 to 40% by weight with respect to the total amount of a resin composition of the insulating layer, and preferably 5 to 30% by weight.
When the proportion of the resin which is not compatible with the thermoplastic resin (A) as a base resin of the insulating layer is too small, an amount of void to be formed in a stretching step is small and adequately satisfactory heat resistance and cushioning property tend to become hard to exert. On the other hand, when the proportion of the resin which is not compatible with the base resin is too large, problems that a stretching property is significantly deteriorated or heat resistance or mechanical strength is deteriorated tend to occur.
In the present invention, the void fraction of the obtained insulating layer needs to be in a range of 15 to 65%, and adjustments of the void fraction are as described in the above-mentioned method of producing the thermal transfer image-receiving sheet.

The insulating layer can be composed of a material formed by mixing the thermoplastic resin (A) with filler as a component. In this case, the filler is not compatible with the thermoplastic resin (A) as a base resin, and is mixed uniformly in the thermoplastic resin (A) in a state of dispersion, and becomes a source to cause peeling at the boundary face with the base resin to generate voids in stretching the thermoplastic resin.
As the filler, inorganic fillers such as silica, kaolin, talc, calcium carbonate, zeolite, alumina, barium sulfate, carbon black, zinc oxide and titanium oxide; and organic fillers such as crosslinked polymer and organic white pigment can be used. Particularly, silicone filler is preferred from the viewpoint of easy occurrence of interfacial peeling and sharpness of particle size distribution. A filler having a mean particle diameter of about 0.5 to 3 µm of these fillers is preferably used.
In the insulating layer, a ratio of the filler to be added varies depending on the void fraction or the stretching conditions required for a stretched film ultimately obtained, and this ratio is generally in a range of 5 to 30% by weight with respect to the resin composition formed by mixing the thermoplastic resin (A) with filler, and preferably in a range of 10 to 20% by weight.

Further, as required, additional components such as an antistatic agent, an ultraviolet absorber, a plasticizer, a dispersant and a coloring agent can be added in an appropriate amount as materials composing the insulating layer.
The above-mentioned dispersant has effects of reducing the dispersion diameter of non-compatible resin particle or uniformalizing the dispersion of filler, and it can make the voids to be formed fine and improve the whiteness of a film and a film-forming property. As the dispersant exhibiting the effects more preferably, olefinic polymers or copolymers having polar groups such as a carboxyl group and an epoxy group, or functional groups having reactivity with polyester, and surfactants such as diethylene glycol, polyalkylene glycol and the like can be used. These dispersants may be used alone or in combination of two or more species.
In the insulating layer, in order to adequately disperse the materials in the thermoplastic resin (A) as a base resin and enhance its interface to further improve properties, the so-called compatibilizing agent can be used. Examples of the compatibilizing agent include a block copolymer, a graft copolymer, or a polymer having a functional group at the end or on the side chain, and a polymer macromer having a polymerizable group at the end of polymer.

The insulating layer and the receiving layer including a thermoplastic resin (B) are melt-coextruded to form a film and then this melt-coextruded film is stretched to become a constituent of the thermal transfer image-receiving sheet.
The thickness of the insulating layer in this thermal transfer image-receiving sheet is generally about 10 to 100 µm after stretching, and preferably about 30 to 50 µm. When the thickness of the insulating layer is too small, it may become impossible to exert adequately satisfactory heat resistance and cushioning property, and when the thickness is too large, problems that heat resistance and mechanical strength are deteriorated tends to occur.

### (Good adhesive layer)

When the layered body consisting of the insulating layer and the receiving layer is laminated on the foregoing substrate using an adhesive, it is preferably implemented to provide a good adhesive layer in order to improve the adhesive property between the adhesive layer and the insulating layer. That is, the thermal transfer image-receiving sheet has a layer configuration of substrate/adhesive layer/good adhesive layer/insulating layer/receiving layer. A resin (also referred to as a "thermoplastic resin (C)" in the present specification) composing the good adhesive layer has an adhesive property to the adhesive layer and the insulating layer, and it is not particularly limited as long as it is a thermoplastic resin which can be formed by melt-extrusion, but polyester resins are preferred. Examples of the polyester resins include the same thermoplastic resins as those described in the descriptions on the insulating layer.
The thickness of the good adhesive layer in this thermal transfer image-receiving sheet is generally about 10 to 100 µm, and preferably about 2 to 30 µm.

### (Image-receiving layer)

In the thermal transfer image-receiving sheet of the present invention, a substance in which at least the insulating layer and the image-receiving layer (receiving layer) are formed on the substrate and voids which are cavities are formed in the insulating layer may be employed.
The receiving layer can be formed from a material similar to the thermoplastic resin described in the paragraph of the insulating layer described above, and among others, it is preferred that the receiving layer contains a polybutylene terephthalate resin. The thermoplastic resin (also referred to as a "thermoplastic resin (B) " in the present specification) in the receiving layer may be the same resin as or may be different from the thermoplastic resin in the insulating layer described above.
In the present invention, a thermoplastic resin used for at least one layer of the insulating layer and the receiving layer or the good adhesive layer, the insulating layer and the receiving layer is preferably a polyester resin.

It is desirable that of thermoplastic resins, the receiving layer contains preferably a polyester resin and more preferably an amorphous polyester resin to the extent not impairing the ability of the receiving layer to be formed by extrusion. In addition, in the receiving layer, the same material and method as in the insulating layer, in which voids being cavities are formed, can be applied.
Examples of the above-mentioned amorphous polyester resin include the following substances.
First, as the amorphous polyester resin, any polyester resin can be used as long as it is substantially amorphous. Examples of this amorphous polyester resin include polyester resins which have terephthalic acid and ethylene glycol as the main components and contain other acid components and/or other glycol components as a copolymerization component described above. As other acid components, aliphatic dibasic acid (for example, adipic acid, sebacic acid, azelaic acid) and aromatic dibasic acid (for example, isophthalic acid, diphenyldicarboxylic acid, 5-tert-butylisophthalic acid, 2,2,6,6-tetramethylbiphenyl-4,4-dicarboxylic acid, 2,6-naphthalenedicarboxylic acid, 1,1,3-trimethyl-3-phenylindene-4,5-dicarboxylic acid) are used. As the glycol components, aliphatic diol (for example, neopentyl glycol, diethylene glycol, propylene glycol, butanediol, hexanediol), alicyclic diol (for example, 1,4-cyclohexanedimethanol) and aromatic diol (for example, xylylene glycol, bis(4-β-hydroxyphenyl)sulfone, 2,2-(4-hydroxyphenyl)propane derivative) are used.

Further, the receiving layer preferably contains an amorphous polyester resin and a polymer (resin) having an epoxy group. The polymer having an epoxy group reacts with a polyester resin through crosslinking and thereby it can improve the ability of the receiving layer to be formed by extrusion in the elevated temperature region described above. As the polymer having an epoxy group, compounds consisting of esters of methacrylic acid or acrylic acid and various glycidyl alcohols are preferred, and examples of these esters include methyl glycidyl ester, butyl glycidyl ester, polyethyleneglycol diglycidyl ester, polypropyleneglycol diglycidyl ester, and neopentylglycol diglycidyl ester.

The receiving layer generally contains also modified silicone oil in addition to the above-mentioned thermoplastic resins in order to prevent melting/adhering to a binder resin in a dye layer holding a dye during the thermal transfer for forming images.
Polyether modified silicone is particularly effective as the above-mentioned modified silicone oil since it can attain a good release property. A polyether group of polyether modified silicone is partially decomposed by heat (180°C or higher) in forming by extrusion, but remaining polyether group keeps the balance of compatibility between resin and silicone, composing the receiving layer and produces a situation in which silicone does not bleed out excessively in forming a film by extrusion or at heat setting after stretching and exists in a balanced manner on the surface of the receiving layer to exhibit a good releasing property.
In order to improve the releasing property, it is preferred to further add various releasing agents such as phosphoric ester, surfactant, fluorine compounds, fluororesin, silicone compounds, silicone oil and silicone resin to a material of the receiving layer in addition to the modified silicone oil.

One or two or more species of the modified silicone oil and releasing agents are used. And, the total of the amounts of the modified silicone oil and the releasing agents to be added is preferably 0.5 to 30 parts by weight with respect to 100 parts by weight of resins for forming the receiving layer. When the amount to be added does not meet this range, problems that the sublimation thermal transfer sheet melts and adheres to the receiving layer of the thermal transfer image-receiving sheet or sensitivity of printing is deteriorated may occur.
By adding the modified silicone oil, and the releasing agents as required to the receiving layer, a releasing agent is bled out to the surface of the receiving layer to form a release layer. Further, these releasing agents may be applied onto the receiving layer separately without being added to the material of the receiving layer.
The thickness of the receiving layer is generally about 0.5 to 50 µm after stretching, and preferably about 1 to 10 µm.

The thermal transfer image-receiving sheet of the present invention is not limited the above description, and a backside layer can be provided on the other side of the substrate, or a intermediate layer can be provided between the adjacent two layers shown in a drawing, or a layer can be added as required.

Next, the present invention will be described in more detail by way of experimental examples. In addition, "part (s)" and "%" refer to "part(s) by weight" and "% by weight" in Experimental Examples, unless otherwise specified.

### (Experimental Example 1)

A material of a receiving layer and a material of an insulating layer, consisting of the following composition, respectively, were melt-coextruded in thicknesses of 36 µm and 360 µm, respectively, and the resulting coextruded film was stretched by 9 times in terms of a material area with a biaxial stretching machine manufactured by Toyo Seiki Seisaku-sho, Ltd., and the stretched film was subjected to heat setting at 240°C while chucking the film in both directions to obtain a receiving layer/insulating layer film of 44 µm in thickness having voids which are minute cavities in the insulating layer.

### (Material of receiving layer)

Polyester resin (SI-173, produced by Toyobo Co., Ltd.) 100 parts
Silicone oil (X-22-3939A, produced by Shin-Etsu Chemical Co., Ltd.) 1 part

### (Material of insulating layer)

Polyester resin (SI-173, produced by Toyobo Co., Ltd.) 80 parts
Calcium carbonate (PO-150-B-10, produced by SHIRAISHI CALCIUM KRISHA, Ltd.) 20 parts

A backside layer consisting of the following composition was formed in a thickness of 25 µm on one side of a two-sided coated paper weighing 158 g/cm² as a substrate by thermal melt-extrusion to obtain a substrate sheet.

### (Material of backside layer)

Polybutylene terephthalate resin (DURANEX 600FP, produced by Polyplastics Co., Ltd.) 100 parts

A thermal transfer image-receiving sheet of Experimental Example 1 was prepared by laminating the above-mentioned receiving layer/insulating layer film on the above-mentioned substrate sheet (backside layer/substrate) by melt-extrusion with the side of being not the receiving layer of the film faced with the side of being not backside layer of the sheet using a material of an adhesive consisting of the following composition.

### (Material of adhesive)

EMAA resin (NUCREL N09008C, produced by Du Pont-Mitsui Polychemicals Co., Ltd.) 100 parts

### (Experimental Example 2)

A material of a receiving layer, a material of an insulating layer and a good adhesive layer, consisting of the following composition, respectively, were melt-coextruded in thicknesses of 36 µm, 360 µm and 36 µm, respectively, and the resulting coextruded film was stretched by 9 times in terms of a material area with a biaxial stretching machine manufactured by Toyo Seiki Seisaku-sho, Ltd. to obtain a receiving layer/insulating layer/good adhesive layer film of 48 µm in thickness having voids which are minute cavities in the insulating layer.

### (Material of receiving layer)

Polyester resin (SI-173, produced by Toyobo Co., Ltd.) 100 parts
Silicone oil (X-22-3939A, produced by Shin-Etsu Chemical Co., Ltd.) 1 part

### (Material of insulating layer)

Polyester resin (SI-173, produced by Toyobo Co., Ltd.) 80 parts
Calcium carbonate (PO-150-B-10, produced by SHIRAISHI CALCIUM KAISHA, Ltd.) 20 parts

### (Material of good adhesive layer)

Polyester resin (SI-173, produced by Toyobo Co., Ltd.) 70 parts
EMAA resin (NUCREL N09008C, produced by Du Pont-Mitsui Polychemicals Co., Ltd.) 30 parts

A thermal transfer image-receiving sheet of Experimental Example 2 was prepared by laminating the above-mentioned receiving layer/insulating layer/good adhesive layer film on the above-mentioned substrate sheet (backside layer/substrate) by melt-extrusion with the side of the good adhesive layer of the film faced with the side of being not backside layer of the sheet as with Experimental Example 1.

### (Experimental Example 3)

A thermal transfer image-receiving sheet of Experimental Example 3 was prepared by following the same procedure as in Experimental Example 1 except for changing the material of the insulating layer of Experimental Example 1 to the following composition.

### (Material of insulating layer)

Polyester resin (SI-173, produced by Toyobo Co., Ltd.) 80 parts
Silicone filler (KMP-590, produced by Shin-Etsu Chemical Co., Ltd.) 20 parts

### (Experimental Example 4)

A thermal transfer image-receiving sheet of Experimental Example 4 was prepared by following the same procedure as in Experimental Example 1 except for changing the material of the insulating layer of Experimental Example 1 to the following composition.

### (Material of insulating layer)

Polyester resin (SI-173, produced by Toyobo Co., Ltd.) 79 parts
Silicone filler (KMP-590, produced by Shin-Etsu Chemical Co., Ltd.) 20 parts
Dispersant; polyethylene glycol (PEG# 6000, produced by NOF Corp.) 1 part

### (Experimental Example 5)

A thermal transfer image-receiving sheet of Experimental Example 5 was prepared by following the same procedure as in Experimental Example 1 except for changing the material of the insulating layer of Experimental Example 1 to the following composition.

### (Material of insulating layer)

Polyester resin (SI-173, produced by Toyobo Co., Ltd.) 80 parts
Polymethylpentene resin (MX004, produced by Mitsui Chemicals, Inc.) 20 parts

### (Experimental Example 6)

A thermal transfer image-receiving sheet of Experimental Example 6 was prepared by following the same procedure as in Experimental Example 1 except for changing the material of the insulating layer of Experimental Example 1 to the following composition.

### (Material of insulating layer)

Polyethylene terephthalate resin (KR-565, produced by Mitsubishi Rayon Co., Ltd.) 79 parts
Silicone filler (KMP-590, produced by Shin-Etsu Chemical Co., Ltd.) 20 parts
Dispersant; polyethylene glycol (PEG#6000, produced by NOF Corp.) 1 part

### (Experimental Example 7)

A thermal transfer image-receiving sheet of Experimental Example 7 was prepared by following the same procedure as in Experimental Example 1 except for changing the material of the receiving layer of Experimental Example 1 to the following composition.

### (Material of receiving layer)

Polyester resin (SI-173, produced by Toyobo Co., Ltd.) 50 parts
Amorphous polyester resin (VYLON 290, produced by TOYOBO Co., Ltd.) 50 parts
Silicone oil (X-22-3939A, produced by Shin-Etsu Chemical Co., Ltd.) 1 part

### (Experimental Example 8)

A thermal transfer image-receiving sheet of Experimental Example 8 was prepared by following the same procedure as in Experimental Example 1 except for changing the material of the receiving layer of Experimental Example 1 to the following composition.

### (Material of receiving layer)

Amorphous polyester resin (VYLON 290, produced by TOYOBO Co., Ltd.) 100 parts
Silicone oil (X-22-3939A, produced by Shin-Etsu Chemical Co., Ltd.) 1 part

### (Experimental Example 9)

A thermal transfer image-receiving sheet of Experimental Example 9 was prepared by following the same procedure as in Experimental Example 1 except for changing the material of the receiving layer of Experimental Example 1 to the following composition.

### (Material of receiving layer)

Amorphous polyester resin (VYLON 290, produced by TOYOBO Co., Ltd.) 100 parts
Compatibilizing agent; epoxy group-containing polymer (polymethyl methacrylate grafted product of ethylene-glycidyl methacrylate copolymer, MODIPER A4200, produced by NOF Corp.) 5 parts
Silicone oil (X-22-3939A, produced by Shin-Etsu Chemical Co., Ltd.) 1 part

### (Experimental Example 10)

A thermal transfer image-receiving sheet of Experimental Example 10 was prepared by following the same procedure as in Experimental Example 1 except for changing the material of the receiving layer of Experimental Example 1 to the following composition.

### (Material of receiving layer)

Polybutylene terephthalate resin (DURANEX 600FP, produced by Polyplastics Co., Ltd.) 100 parts
Silicone oil (X-22-3939A, produced by Shin-Etsu Chemical Co., Ltd.) 1 part

### (Experimental Example 11)

A thermal transfer image-receiving sheet of Experimental Example 11 was prepared by following the same procedure as in Experimental Example 1 except for changing the material of the receiving layer of Experimental Example 1 to the following composition.

### (Material of receiving layer)

Polybutylene terephthalate resin (DURANEX 600FP, produced by Polyplastics Co., Ltd.) 50 parts
Amorphous polyester resin (VYLON 290, produced by TOYOBO Co., Ltd.) 50 parts
Silicone oil (X-22-3939A, produced by Shin-Etsu Chemical Co., Ltd.) 1 part

### (Experimental Example 12)

A thermal transfer image-receiving sheet of Experimental Example 12 was prepared by following the same procedure as in Experimental Example 1 except for changing the material of the receiving layer and the material of the insulating layer of Experimental Example 1 to the following composition.

### (Material of receiving layer)

Polybutylene terephthalate resin (DURANEX 600FP, produced by Polyplastics Co., Ltd.) 100 parts
Silicone oil (X-22-3939A, produced by Shin-Etsu Chemical Co., Ltd.) 1 part

### (Material of insulating layer)

Polybutylene terephthalate resin (DURANEX 600FP, produced by Polyplastics Co., Ltd.) 80 parts
Calcium carbonate (PO-150-B-10, produced by SHIRAISHI CALCIUM KAISHA, Ltd.) 20 parts

### (Experimental Example 13)

A material of a receiving layer and a material of an insulating layer, consisting of the following composition, respectively, were melt-coextruded in thicknesses of 36 µm and 360 µm, respectively, and the resulting coextruded film was stretched by 9 times in terms of a material area with a biaxial stretching machine manufactured by Toyo Seiki Seisaku-sho, Ltd. to obtain a receiving layer/insulating layer film of 44 µm in thickness having voids which are minute cavities in the insulating layer.

### (Material of receiving layer)

Polyester resin (SI-173, produced by Toyobo Co., Ltd.) 100 parts

### (Material of insulating layer)

Polyester resin (SI-173, produced by Toyobo Co., Ltd.) 80 parts
Calcium carbonate (PO-150-B-10, produced by SHIRAISHI CALCIUM KAISHA, Ltd.) 20 parts

A release layer consisting of the following composition was provided on the receiving layer side of the above-mentioned receiving layer/insulating layer film in a dried thickness of 0.5 µm, and the resulting receiving layer/insulating layer film was laminated on a substrate sheet (backside layer/substrate) by melt-extrusion, as with Experimental Example 1, with the insulating layer side of the film faced with the side of being not backside layer of the sheet to obtain a thermal transfer image-receiving sheet of Experimental Example 13.

### (Material of release layer)

Silicone oil (X-22-3939A, produced by Shin-Etsu Chemical Co., Ltd.) 100 parts

### (Experimental Example 14)

In the thermal transfer image-receiving sheet prepared in Experimental Example 1, a stretching ratio of the coextruded film to be stretched was set at a factor of 3.6 in terms of an area and a melting temperature during the melt-coextrusion was lowered a little to adjust processing conditions so that a void fraction of the insulating layer becomes 15%. A thermal transfer image-receiving sheet of Experimental Example 14 was prepared in the same manner as in Experimental Example 1 except for the above-mentioned conditions.

### (Experimental Example 15)

In the thermal transfer image-receiving sheet prepared in Experimental Example 3, a stretching ratio of the coextruded film to be stretched was set at a factor of 25 in terms of an area and a melting temperature during the melt-coextrusion was elevated a little to adjust processing conditions so that a void fraction of the insulating layer becomes 63%. A thermal transfer image-receiving sheet of Experimental Example 15 was prepared in the same manner as in Experimental Example 3 except for the above-mentioned conditions.

### (Experimental Example 16)

A thermal transfer image-receiving sheet of Experimental Example 16 was prepared by following the same procedure as in Experimental Example 1 except for changing the material of the insulating layer of Experimental Example 1 to the following composition.

### (Material of insulating layer)

Polyester resin (SI-173, produced by Toyobo Co., Ltd.) 100 parts

### (Experimental Example 17)

A stretching ratio of the coextruded film to be stretched was set at a factor of 3.5 in terms of an area and a melting temperature during the melt-coextrusion was lowered a little to adjust processing conditions so that a void fraction of the insulating layer becomes 10%. A thermal transfer image-receiving sheet of Experimental Example 17 was prepared in the same manner as in Experimental Example 1 except for the above-mentioned conditions.

### (Experimental Example 18)

A stretching ratio of the coextruded film to be stretched was set at a factor of 26 in terms of an area and a melting temperature during the melt-coextrusion was elevated a little to adjust processing conditions so that a void fraction of the insulating layer becomes 70%. A thermal transfer image-receiving sheet of Experimental Example 18 was prepared in the same manner as in Experimental Example 3 except for the above-mentioned conditions.

### (Experimental Example 19)

A thermal transfer image-receiving sheet of Experimental Example 19 was prepared by following the same procedure as in Experimental Example 1 except for changing the material of the receiving layer of Experimental Example 1 to the following composition.

### (Material of receiving layer)

Polyester resin (SI-173, produced by Toyobo Co., Ltd.) 100 parts

### (Experimental Example 20)

A thermal transfer image-receiving sheet of Experimental Example 20 was prepared by following the same procedure as in Experimental Example 1 except for changing the material of the receiving layer of Experimental Example 1 to the following composition.

### (Material of receiving layer)

Polyester resin (SI-173, produced by Toyobo Co., Ltd.) 100 parts
Organopolysiloxane resin (Syl-OFF7044, produced by Dow Corning Corp.) 1 part

### (Experimental Example 21)

A thermal transfer image-receiving sheet of Experimental Example 21 was prepared by following the same procedure as in Experimental Example 1 except for changing the material of the backside layer of Experimental Example 1 to the following composition.

### (Material of backside layer)

Polypropylene resin (J-ALLOMER LR711-5, produced by Japan Polyolefins Co., Ltd.) 100 parts

### (Evaluation)

Next, the thermal transfer image-receiving sheets of Experimental Examples were evaluated according to the following methods.

### <Evaluation method>

(Thermal transfer recording) As a thermal transfer film, a transfer film UPC-740 for a sublimation transfer printer UP-D70A manufactured by SONY Corp. was used and the above-mentioned thermal transfer image-receiving sheets of Experimental Examples were used, and this film was superimposed on the image-receiving sheet with a dye layer of the film faced with a dye-receiving face of the sheet, and three colors of Y (yellow), M (magenta) and C (cyan), and a protective layer were thermally transferred and recorded in this order from the backside of the thermal transfer film under the following conditions using a thermal head.

(Printed letter A) A gradation image was formed by thermal transfer recording under the following conditions.
- Thermal head: KYT-86-12MFW11 (manufactured by KYOCERA Corp.)
- Average resistance of heating element: 4412 (Ω)
- Print density in main scanning direction: 300 dpi
- Print density in sub scanning direction: 300 dpi
- Applied power: 0.136 (w/dot)
- One line cycle: 6 (msec.)
- Print starting temperature: 30 (°C)
- Print size: 100 mm x 150 mm
- Tone printing: Using a test printer of multi-pulse mode which can adjust the number of divided pulses having a pulse length obtained by equally dividing a one line cycle into 256 from 0 to 255 in the one line cycle, a duty ratio of each divided pulse was fixed at 40%, and the number of the pulses per the line cycle was added in increments of 17 pulses, for example 0 pulses for 1st step tone, 17 pulses for 2nd step tone, 34 pulses for 3rd step tone, from 0 to 255 pulses in accordance with the tone, and thereby 16 tones from 1st step to 16th step were controlled.
- Transfer of protective layer: Using a test printer of multi-pulse mode which can adjust the number of divided pulses having a pulse length obtained by equally dividing a one line cycle into 256 from 0 to 255 in the one line cycle, a duty ratio of each divided pulse was fixed at 50%, and the number of the pulses per the line cycle was fixed at 210, and solid printing was performed, and a protective layer was transferred onto the whole printed surface.

(Print density) The maximum reflection density of the above-mentioned printed substance was measured with a visual filter using an optical reflective density meter (manufactured by GretagMacbeth AG., MacBeth RD-918).
Evaluation: O The maximum reflection density is 2.0 or more.
x The maximum reflection density is less than 2.0.

### (Density and void fraction of insulating layer)

In the thermal transfer image-receiving sheet obtained in the above each Experimental Example, the density (p) of the insulating layer having voids was measured. Further, the void fraction (V) of the insulating layer in the thermal transfer image-receiving sheet obtained in the above each Experimental Example was determined from the equation void fraction (V)=(1-ρ/ρ₀) × 100 (%). Here, ρ is a density of an insulating layer, and ρ₀ is a density of the whole solid matter such as resin and filler composing the insulating layer.

### (Curling after printing image)

The above-mentioned printed substance was placed horizontally on a flat location with the receiving layer upside immediately after printing images and the heights (magnitudes of curling) of four corners of the printed substance were measured.
Evaluation: O Mean value of the magnitudes of curling at four corners is 10 mm or less, or curling is convex.
x Mean value of the magnitudes of curling at four corners is larger than 10 mm.

The results of the above evaluations are shown in Table 1 below.

**Table 1**

| Test piece | Density of insulating layer (g/cm³) | Void fraction of insulating layer (%) | Print density | Curling after printing image |
|---|---|---|---|---|
| Experimental Example 1 | 0.95 | 27 | O | O |
| Experimental Example 2 | 0.95 | 27 | O | O |
| Experimental Example 3 | 0.52 | 60 | O | O |
| Experimental Example 4 | 0.52 | 60 | O | O |
| Experimental Example 5 | 0.61 | 53 | O | O |
| Experimental Example 6 | 0.52 | 60 | O | O |
| Experimental Example 7 | 0.95 | 27 | O | O |
| Experimental Example 8 | 0.95 | 27 | O | O |
| Experimental Example 9 | 0.95 | 27 | O | O |
| Experimental Example | 0.95 | 27 | O | O |
| Experimental Example 10 | 0.95 | 27 | O | O |
| Experimental Example 11 | 0.78 | 41 | O | O |
| Experimental Example 12 | 0.98 | 25 | O | O |
| Experimental Example 13 | 0.97 | 15 | O | O |
| Experimental Example 14 | 0.50 | 63 | O | O |
| Experimental Example 15 | 1.3 | 0 | × | O |
| Experimental Example 16 | 1.15 | 10 | × | O |
| Experimental Example 17 | 0.45 | 70 | ―*¹ | O |
| Experimental Example 18 | 0.95 | 27 | ―*² | ― |
| Experimental Example 19 | 0.95 | 27 | ―*² | *² |
| Experimental Example 20 | 0.95 | 27 | O | ―*³ |

In the insulating layer in the above Experimental Example 18, a porous foam structure is not stably formed, and measurement results of the density and the void fraction in a partial foam structure are shown.
*1 ; On the thermal transfer image-receiving sheet in Experimental Example 18, the density could not be determined because projections and depressions of the image-receiving face on which images are formed are large and variations in the print density are large.
*2 ; On the thermal transfer image-receiving sheets in Experimental Examples 19 and 20, the print density and the curling after printing images could not be evaluated because the thermal transfer image-receiving sheets were melted and adhered to the thermal transfer films during printing images.
*3 ; On the thermal transfer image-receiving sheet in Experimental Example 21, the curling after printing images was not evaluated.

As shown in the above Table, all the printed substances in Experimental Examples 1 to 15 have a high density of 2.0 or more in the maximum reflection density, and can attain high-resolution images, and further have no practical problem on curling after printing images. On the other hand, in all of the printed substances in Experimental Examples 16 and 17, the maximum reflection density did not reach 2.0, and the densities of these printed substances were not satisfactory as the maximum image density. And, all the insulating layers having voids, produced in Experimental Examples 1 to 15, have a void fraction within a range of 15 to 65% and have a void which is a proper cavity. On the other hand, all the insulating layers produced in Experimental Examples 16 and 17 have a void fraction of less than 15%, and it is considered that these insulating layers do not produce a void which is a proper cavity. Further, the insulating layer produced in Experimental Example 18 has a void fraction of 70%, but a porous foam structure which is a cavity of the insulating layer is not stably formed, and measurements of the void fraction in a foam structure locally observed are shown. The insulating layer in Experimental Example 18 was in a state in which a porous foam structure could not be stably formed, and it could not be in practical use as a thermal transfer image-receiving sheet, and its density could not be determined because projections and depressions of the image-receiving face on which images were formed were large and variations in the print density were large.

All the printed substances in Experimental Examples 19 to 21 had a void fraction of the insulating layer of 27% and had a density of 0.95 g/cm³, but on the thermal transfer image-receiving sheets in Experimental Examples 19 and 20 in which the materials of the image-receiving layers did not contain modified silicone oil, the print density and the curling after printing images could not be evaluated because the thermal transfer image-receiving sheets were melted and adhered to the thermal transfer films during printing images. And, the printed substance in Experimental Example 21 had a print density of 2.0 or more in the maximum reflection density and was superior in image-formation.

### BRIEF DESCRIPTIONS OF THE DRAWINGS

Figure 1 is a schematic view showing an example of a producing system illustrating a method of producing the thermal transfer image-receiving sheet of the present invention.

### EXPLANATION OF THE NUMERICAL SYMBOLS

- 1: producing system
- 2: die head
- 3: material of an image-receiving layer
- 4: outlet
- 5: film layer
- 6: stretching roll
- 7: tenter
- 8: image-receiving layer
- 9: die head
- 10: adhesive layer
- 11: substrate
- 12: laminating roll
- 13: press roll
- 14: material of an insulating layer
- 15: insulating layer
- 16: thermal transfer image-receiving sheet

## Claims

1. A thermal transfer image-receiving sheet prepared by forming at least an insulating layer and an image-receiving layer in this order on a substrate,
wherein said thermal transfer image-receiving sheet comprises a layered body of a film having the insulating layer including a thermoplastic resin (A) and a resin or filler which is not compatible with the thermoplastic resin (A) and the image-receiving layer including a thermoplastic resin (B), and formed by melt-coextruding said insulating layer and said image-receiving layer and then stretching this melt-coextruded film, and
said thermal transfer image-receiving sheet is a substance having the layered body laminated on a substrate with the insulating layer side of the layered body faced with the substrate, and
said image-receiving layer or a release layer provided on said image-receiving layer side of said layered body contains modified silicone oil, and
the void fraction of the insulating layer is 15 to 65%.

2. The thermal transfer image-receiving sheet according to claim 1,
wherein at least one of said thermoplastic resin (A) and said thermoplastic resin (B) is a polyester resin.

3. A thermal transfer image-receiving sheet prepared by forming at least a good adhesive layer, an insulating layer and an image-receiving layer in this order on a substrate,
wherein said thermal transfer image-receiving sheet comprises a layered body of a film having the good adhesive layer including a thermoplastic resin (C), the insulating layer including a thermoplastic resin (A) and a resin or filler which is not compatible with the thermoplastic resin (A), and the image-receiving layer including a thermoplastic resin (B), and formed by melt-coextruding said good adhesive layer, said insulating layer and said image-receiving layer and then stretching this melt-coextruded film, and
said thermal transfer image-receiving sheet is a substance having the layered body laminated on a substrate with the good adhesive layer side of the layered body faced with the substrate, and
said image-receiving layer or a release layer provided on said image-receiving layer side of said layered body contains modified silicone oil, and
the void fraction of the insulating layer is 15 to 65%.

4. The thermal transfer image-receiving sheet according to claim 3,
wherein at least one of said thermoplastic resin (A), said thermoplastic resin (B) and said thermoplastic resin (C) is a polyester resin.

5. The thermal transfer image-receiving sheet according to claim 2 or 4,
wherein said image-receiving layer contains an amorphous polyester resin.

6. The thermal transfer image-receiving sheet according to claim 2 or 4,
wherein said image-receiving layer contains a polybutylene terephthalate resin.

7. The thermal transfer image-receiving sheet according to any one of claims 2, 4, 5 and 6,
wherein said image-receiving layer contains an amorphous polyester resin and a polymer having an epoxy group.

8. The thermal transfer image-receiving sheet according to any one of claims 1 to 7,
wherein a stretching ratio of the film to be stretched is a factor of 3. 6 or more and 25 or less in terms of an area.

9. The thermal transfer image-receiving sheet according to any one of claims 1 to 8,
wherein said thermal transfer image-receiving sheet is formed by applying a polyester resin on the side of the substrate which is not the side of said substrate on which said layered body is laminated.

10. A method of producing a thermal transfer image-receiving sheet in which at least an insulating layer and an image-receiving layer are formed in this order on a substrate, comprising the steps of
melt-coextruding the insulating layer including a thermoplastic resin (A) and a resin or filler which is not compatible with the thermoplastic resin (A) and the image-receiving layer including a thermoplastic resin (B) to form a film, and then stretching this melt-coextruded film to form a layered body of a film, and then laminating the layered body on a substrate with the insulating layer side of the layered body faced with the substrate,
wherein said image-receiving layer or a release layer provided on said image-receiving layer side of said layered body contains modified silicone oil and
the void fraction of the insulating layer is 15 to 65%.

11. The method of producing a thermal transfer image-receiving sheet according to claim 10,
wherein at least one of the thermoplastic resin (A) and the thermoplastic resin (B) is a polyester resin.

12. A method of producing a thermal transfer image-receiving sheet in which at least a good adhesive layer, an insulating layer and an image-receiving layer are formed in this order on a substrate, comprising the steps of
melt-coextruding the good adhesive layer including a thermoplastic resin (C), the insulating layer including a thermoplastic resin (A) and a resin or filler which is not compatible with the thermoplastic resin (A) and the image-receiving layer including a thermoplastic resin (B) to form a film, and then stretching this melt-coextruded film to form a layered body of a film, and then laminating the layered body on a substrate with the good adhesive layer side of the layered body faced with the substrate,
wherein said image-receiving layer or a release layer provided on said image-receiving layer side of said layered body contains modified silicone oil and
the void fraction of the insulating layer is 15 to 65%.

13. The method of producing a thermal transfer image-receiving sheet according to claim 12,
wherein at least one of the thermoplastic resin (A), the thermoplastic resin (B) and the thermoplastic resin (C) is a polyester resin.

14. The method of producing a thermal transfer image-receiving sheet according to any one of claims 10 to 13,
wherein a stretching ratio of the film to be stretched is a factor of 3.6 or more and 25 or less in terms of an area.

15. The method of producing a thermal transfer image-receiving sheet according to any one of claims 10 to 14,
wherein said thermal transfer image-receiving sheet is formed by applying a polyester resin on the side of the substrate which is not the side of said substrate on which said layered body is laminated.

## Patentansprüche

1. Folie zum Empfangen von Bildern durch Wärmeübertragung, hergestellt durch Ausbilden mindestens einer Isolationsschicht und einer Bildempfangsschicht in dieser Reihenfolge auf einem Substrat,
wobei die Folie zum Empfangen von Bildern durch Wärmeübertragung einen Schichtkörper aus einem Film mit der Isolationsschicht mit einem thermoplastischen Harz (A) darin und einem Harz oder Füllstoff, das/der mit dem thermoplastischen Harz (A) nicht verträglich ist, und die Bildempfangsschicht mit einem thermoplastischen Harz (B) umfaßt und durch gemeinsames Schmelzextrudieren der Isolationsschicht und der Bildempfangsschicht und nachfolgendes Strecken dieses schmelzkoextrudierten Films ausgebildet ist, und
die Folie zum Empfangen von Bildern durch Wärmeübertragung eine Substanz ist, bei welcher der Schichtkörper auf ein Substrat aufkaschiert ist, wobei die die Isolationsschicht bildende Seite des Schichtkörpers zu dem Substrat weist, und
die Bildempfangsschicht oder eine ablösbare Schicht, die auf der die Bildempfangsschicht bildenden Seite des Schichtkörpers vorgesehen ist, modifiziertes Silikonöl enthält, und
der Hohlraumanteil an der Isolationsschicht 15 bis 65% beträgt.

2. Folie zum Empfangen von Bildern durch Wärmeübertragung nach Anspruch 1,
wobei mindestens eines von dem thermoplastischen Harz (A) und dem thermoplastischen Harz (B) ein Polyesterharz ist.

3. Folie zum Empfangen von Bildern durch Wärmeübertragung, hergestellt durch Ausbilden mindestens einer gut klebenden Schicht, einer Isolationsschicht und einer Bildempfangsschicht in dieser Reihenfolge auf einem Substrat,
wobei die Folie zum Empfangen von Bildern durch Wärmeübertragung einen Schichtkörper aus einem Film mit der gut klebenden Schicht mit einem thermoplastischen Harz (C) darin, der Isolationsschicht mit einem thermoplastischen Harz (A) darin und einem Harz oder Füllstoff, das/der mit dem thermoplastischen Harz (A) nicht verträglich ist, und die Bildempfangsschicht mit einem thermoplastischen Harz (B) darin umfaßt und durch gemeinsames Schmelzextrudieren der gut klebenden Schicht, der Isolationsschicht und der Bildempfangsschicht und nachfolgendes Strecken dieses schmelzkoextrudierten Films ausgebildet ist, und
die Folie zum Empfangen von Bildern durch Wärmeübertragung eine Substanz ist, bei welcher der Schichtkörper auf ein Substrat aufkaschiert ist, wobei die Seite mit der gut klebenden Schicht des Schichtkörpers zu dem Substrat weist, und
die Bildempfangsschicht oder eine ablösbare Schicht, die auf der die Bildempfangsschicht bildenden Seite des Schichtkörpers vorgesehen ist, modifiziertes Silikonöl enthält, und
der Hohlraumanteil in der Isolationsschicht 15 bis 65% beträgt.

4. Folie zum Empfangen von Bildern durch Wärmeübertragung nach Anspruch 3,
wobei mindestens eines von dem thermoplastischen Harz (A), dem thermoplastischen Harz (B) und dem thermoplastischen Harz (C) ein Polyesterharz ist.

5. Folie zum Empfangen von Bildern durch Wärmeübertragung nach Anspruch 2 oder 4,
wobei die Bildempfangsschicht ein amorphes Polyesterharz enthält.

6. Folie zum Empfangen von Bildern durch Wärmeübertragung nach Anspruch 2 oder 4,
wobei die Bildempfangsschicht ein Polybutylenterephthalatharz enthält.

7. Folie zum Empfangen von Bildern durch Wärmeübertragung nach einem der Ansprüche 2, 4, 5 und 6,
wobei die Bildempfangsschicht ein amorphes Polyesterharz und ein Polymer mit einer Epoxidgruppe enthält.

8. Folie zum Empfangen von Bildern durch Wärmeübertragung nach einem der Ansprüche 1 bis 7,
wobei ein Streckverhältnis des zu streckenden Films ein Faktor von 3,6 oder mehr und von 25 oder weniger bezüglich einer Fläche ist.

9. Folie zum Empfangen von Bildern durch Wärmeübertragung nach einem der Ansprüche 1 bis 8,
wobei die Folie zum Empfangen von Bildern durch Wärmeübertragung durch Aufbringen eines Polyesterharzes auf die Seite des Substrats ausgebildet ist, die nicht die Seite des Substrats ist, auf welche der Schichtkörper aufkaschiert ist.

10. Verfahren zur Herstellung einer Folie zum Empfangen von Bildern durch Wärmeübertragung, in der mindestens eine Isolationsschicht und eine Bildempfangsschicht in dieser Reihenfolge auf einem Substrat ausgebildet sind, mit den Schritten des
gemeinsamen Schmelzextrudierens der Isolationsschicht mit einem thermoplastischen Harz (A) darin und einem Harz oder Füllstoff, das/der mit dem thermoplastischen Harz (A) nicht verträglich ist, wobei die Bildempfangsschicht ein thermoplastisches Harz (B) zum Ausbilden eines Films umfaßt, und des nachfolgenden Streckens dieses schmelzkoextrudierten Films zum Ausbilden eines Schichtkörpers eines Films und des nachfolgenden Aufkaschierens des Schichtkörpers auf ein Substrat, wobei die die Isolationsschicht bildende Seite des Schichtkörpers zu dem Substrat weist,
wobei die Bildempfangsschicht oder eine ablösbare Schicht, die auf der Bildempfangsschicht-Seite des Schichtkörpers vorgesehen ist, modifiziertes Silikonöl enthält, und
der Hohlraumanteil an der Isolationsschicht 15 bis 65% beträgt.

11. Verfahren zur Herstellung einer Folie zum Empfangen von Bildern durch Wärmeübertragung nach Anspruch 10,
wobei mindestens eines von dem thermoplastischen Harz (A) und dem thermoplastischen Harz (B) ein Polyesterharz ist.

12. Verfahren zur Herstellung einer Folie zum Empfangen von Bildern durch Wärmeübertragung, in der mindestens eine gut klebende Schicht, eine Isolationsschicht und eine Bildempfangsschicht in dieser Reihenfolge auf einem Substrat ausgebildet sind, mit den Schritten des
gemeinsamen Schmelzextrudierens der gut klebenden Schicht mit einem thermoplastischen Harz (C) darin, der Isolationsschicht mit einem thermoplastischen Harz (A) darin und eines Harzes oder Füllstoffs, das/der mit dem thermoplastischen Harz (A) nicht verträglich ist, und der Bildempfangsschicht mit einem thermoplastischen Harz (B) darin zum Ausbilden eines Films und des nachfolgenden Streckens dieses schmelzkoextrudierten Films zum Ausbilden eines Schichtkörpers eines Films und des nachfolgenden Laminierens des Schichtkörpers auf ein Substrat, wobei die Seite mit der gut klebenden Schicht des Schichtkörpers zu dem Substrat weist, und
wobei die Bildempfangsschicht oder eine ablösbare Schicht, die auf der Bildempfangsschicht-Seite des Schichtkörpers vorgesehen ist, modifiziertes Silikonöl enthält, und
der Hohlraumanteil in der Isolationsschicht 15 bis 65% beträgt.

13. Verfahren zur Herstellung einer Folie zum Empfangen von Bildern durch Wärmeübertragung nach Anspruch 12,
wobei mindestens eines von dem thermoplastischen Harz (A), dem thermoplastischen Harz (B) und dem thermoplastischen Harz (C) ein Polyesterharz ist.

14. Verfahren zur Herstellung einer Folie zum Empfangen von Bildern durch Wärmeübertragung nach einem der Ansprüche 10 bis 13,
wobei ein Streckverhältnis des zu streckenden Films ein Faktor von 3,6 oder mehr und von 25 oder weniger bezüglich einer Fläche ist.

15. Folie zum Empfangen von Bildern durch Wärmeübertragung nach einem der Ansprüche 10 bis 14,
wobei die Folie zum Empfangen von Bildern durch Wärmeübertragung durch Aufbringen eines Polyesterharzes auf die Seite des Substrats ausgebildet ist, die nicht die Seite des Substrats ist, auf welche der Schichtkörper aufkaschiert ist.

## Revendications

1. Feuille réceptrice d'image par transfert thermique préparée en formant au moins une couche isolante et une couche réceptrice d'image dans cet ordre sur un substrat,
où ladite feuille réceptrice d'image par transfert thermique comprend un corps en couches d'un film ayant la couche isolante incluant une résine thermoplastique (A) et une résine ou charge qui n'est pas compatible avec la résine thermoplastique (A) et la couche réceptrice d'image incluant une résine thermoplastique (B), et formé par coextrusion à l'état fondu de ladite couche isolante et de ladite couche réceptrice d'image puis étirage de ce film coextrudé à l'état fondu, et
ladite feuille réceptrice d'image par transfert thermique est une substance ayant le corps en couches disposé en couches sur un substrat avec le côté couche isolante du corps en couches tourné vers le substrat, et
ladite couche réceptrice d'image ou une couche de séparation fournie sur ledit côté couche réceptrice d'image dudit corps en couches contient une huile de silicone modifiée, et
la fraction de vides de la couche isolante est 15 à 65 %.

2. Feuille réceptrice d'image par transfert thermique selon la revendication 1, où au moins l'une parmi ladite résine thermoplastique (A) et ladite résine thermoplastique (B) est une résine de polyester.

3. Feuille réceptrice d'image par transfert thermique préparée en formant au moins une bonne couche adhésive, une couche isolante et une couche réceptrice d'image dans cet ordre sur un substrat,
où ladite feuille réceptrice d'image par transfert thermique comprend un corps en couches d'un film ayant la bonne couche adhésive incluant une résine thermoplastique (C), la couche isolante incluant une résine thermoplastique (A) et une résine ou charge qui n'est pas compatible avec la résine thermoplastique (A), et la couche réceptrice d'image incluant une résine thermoplastique (B), et formé par coextrusion à l'état fondu de ladite bonne couche adhésive, de ladite couche isolante et de ladite couche réceptrice d'image puis étirage de ce film coextrudé à l'état fondu, et
ladite feuille réceptrice d'image par transfert thermique est une substance ayant le corps en couches disposé en couches sur un substrat avec le côté bonne couche adhésive du corps en couches tourné vers le substrat, et
ladite couche réceptrice d'image ou une couche de séparation fournie sur ledit côté couche réceptrice d'image dudit corps en couches contient une huile de silicone modifiée, et
la fraction de vides de la couche isolante est 15 à 65 %.

4. Feuille réceptrice d'image par transfert thermique selon la revendication 3, où au moins l'une parmi ladite résine thermoplastique (A), ladite résine thermoplastique (B) et ladite résine thermoplastique (C) est une résine de polyester.

5. Feuille réceptrice d'image par transfert thermique selon la revendication 2 ou 4, où ladite couche réceptrice d'image contient une résine de polyester amorphe.

6. Feuille réceptrice d'image par transfert thermique selon la revendication 2 ou 4, où ladite couche réceptrice d'image contient une résine de polybutylènetéréphtalate.

7. Feuille réceptrice d'image par transfert thermique selon l'une quelconque des revendications 2, 4, 5 et 6,
où ladite couche réceptrice d'image contient une résine de polyester amorphe et un polymère ayant un groupe époxy.

8. Feuille réceptrice d'image par transfert thermique selon l'une quelconque des revendications 1 à 7, où un rapport d'étirage du film destiné à être étiré est un facteur de 3,6 ou plus et 25 ou moins en termes d'une aire.

9. Feuille réceptrice d'image par transfert thermique selon l'une quelconque des revendications 1 à 8, où ladite feuille réceptrice d'image par transfert thermique est formée par application d'une résine de polyester sur le côté du substrat qui n'est pas le côté dudit substrat sur lequel ledit corps en couches est disposé en couches.

10. Procédé de production d'une feuille réceptrice d'image par transfert thermique où au moins une couche isolante et une couche réceptrice d'image sont formées dans cet ordre sur un substrat, comprenant les étapes de :
coextrusion à l'état fondu de la couche isolante incluant une résine thermoplastique (A) et une résine ou charge qui n'est pas compatible avec la résine thermoplastique (A) et la couche réceptrice d'image incluant une résine thermoplastique (B) pour former un film, puis étirage de ce film coextrudé à l'état fondu pour former un corps en couches d'un film, puis disposition en couche du corps en couches sur un substrat avec le côté couche isolante du corps en couches tourné vers le substrat,
où ladite couche réceptrice d'image ou une couche de séparation fournie sur ledit côté couche réceptrice d'image dudit corps en couches contient une huile de silicone modifiée, et
la fraction de vides de la couche isolante est 15 à 65 %.

11. Procédé de production d'une feuille réceptrice d'image par transfert thermique selon la revendication 10 où au moins l'une parmi la résine thermoplastique (A) et la résine thermoplastique (B) est une résine de polyester.

12. Procédé de production d'une feuille réceptrice d'image par transfert thermique où au moins une bonne couche adhésive, une couche isolante et une couche réceptrice d'image sont formées dans cet ordre sur un substrat, comprenant les étapes de :
coextrusion à l'état fondu de la bonne couche adhésive incluant une résine thermoplastique (C), de la couche isolante incluant une résine thermoplastique (A) et une résine ou charge qui n'est pas compatible avec la résine thermoplastique (A) et de la couche réceptrice d'image incluant une résine thermoplastique (B) pour former un film, puis étirage de ce film coextrudé à l'état fondu pour former un corps en couches d'un film, puis disposition en couche du corps en couches sur un substrat avec le côté bonne couche adhésive du corps en couches tourné vers le substrat,
où ladite couche réceptrice d'image ou une couche de séparation fournie sur ledit côté couche réceptrice d'image dudit corps en couches contient une huile de silicone modifiée, et
la fraction de vides de la couche isolante est 15 à 65 %.

13. Procédé de production d'une feuille réceptrice d'image par transfert thermique selon la revendication 12, ou au moins l'une parmi la résine thermoplastique (A), la résine thermoplastique (B) et la résine thermoplastique (C) est une résine de polyester.

14. Procédé de production d'une feuille réceptrice d'image par transfert thermique selon l'une quelconque des revendications 10 à 13,
où un rapport d'étirage du film destiné à être étiré est un facteur de 3,6 ou plus et de 25 ou moins en termes d'une aire.

15. Procédé de production d'une feuille réceptrice d'image par transfert thermique selon l'une quelconque des revendications 10 à 14 où ladite feuille réceptrice d'image par transfert thermique est formée par application d'une résine de polyester sur le côté du substrat qui n'est pas le côté dudit substrat sur lequel ledit corps en couches est disposé en couches.
